# EUROPEAN PATENT SPECIFICATION

(11) **EP 4 467 800 B1**
(45) Date of publication and mention of the grant of the patent: **01.04.2026**
(21) Application number: 24177771.3
(22) Date of filing: 23.05.2024
(51) Int. Cl.: F02C 7/22, F02C 9/30, F04B 49/00, F04B 49/06, F02C 9/26

(54) **FLUID PUMP SYSTEMS**
FLÜSSIGKEITSPUMPENSYSTEME
SYSTÈMES DE POMPE À FLUIDE

(30) Priority: 26.05.2023 US 202318202661
(43) Date of publication of application: 27.11.2024
(73) Proprietor: Hamilton Sundstrand Corporation, Charlotte, NC 28217-4578 (US)
(72) Inventor: SHOOK, Ryan, Loves Park, 61111 (US); SUSCA, Prescott Ryan, Windsor, 06095 (US); HAUGSJAAHABINK, Todd, Amherst, 01002 (US)
(74) Representative: Dehns

(56) References cited:
- EP-A2- 4 063 654
- US-A- 5 806 300
- US-A1- 2004 200 459
- US-A1- 2007 044 768
- US-A1- 2008 289 338
- US-A1- 2013 098 022
- US-A1- 2018 372 006
- US-A1- 2022 372 968

## Description

### FIELD

This disclosure relates to fluid pump systems.

### BACKGROUND

Fluid pump systems can be utilized in many different areas. For example, fluid pump systems can be used for fuel pumping on aircraft or other vehicles. Fuel system weight and pump system heat rejection can indirectly limit that amount of fuel the aircraft can carry and how much heat rejection can be allowed into the fuel. Fluid pump systems are disclosed in EP 4 063 654 A2, US 2022/372968 A1 and US 5 806 300 A.

Conventional methods and systems have generally been considered satisfactory for their intended purpose. However, there is still a need in the art for improvements. The present disclosure provides a solution for this need.

### SUMMARY

A fluid pump system is provided as defined by claim 1.

The controllable pump can be configured to open a low flow window at a low displacement angle and/or position. The flow split system can include a bypass line in fluid communication with the low flow window of the controllable pump.

The flow split system can include a flow sense valve (FSV) comprising a piston. The piston can be biased (e.g., with a spring) against pressure on the bypass line such that the bypass flow is configured to move the piston.

The flow split system can include a piston position sensor associated with the piston configured to determine a position of the piston. The piston position sensor can be a linear variable differential transformer (LVDT), for example.

The controllable pump can include a pump position sensor configured to sense a position of the controllable pump. The pump position sensor can be a LVDT, for example.

The fluid pump system can include a flow module operatively connected to the pump position sensor, the piston position sensor, a pump speed source, and an output line pressure sensor. The flow module can be configured to determine flow through the controllable pump and flow through the bypass line and flow split system, and to subtract the flow through the bypass line from the flow through the controllable pump to determine the output flow. In certain embodiments, the fluid pump system can include the pressure sensor on the output line downstream of the controllable pump.

In certain embodiments, the flow module can be configured to determine pump flow through the controllable pump as a function of a pump position, a pump speed, and an output line pressure. In certain embodiments, the flow module is configured to determine bypass flow on the bypass line and through the flow split system as a function of a piston position, a piston spring constant, window geometry of the low flow window, and an open area of the low flow window at the controllable pump speed and/or position. Any other suitable variables to determine pump flow and bypass flow to determine output flow are contemplated herein. In certain embodiments, the flow module can be configured to control the controllable pump to generate a commanded output flow based on the determined output flow from the controllable pump based on the bypass flow and pump flow.

In certain embodiments, the fluid pump system can include a shut off valve (SOV) between output line and an engine line. The SOV can be controlled by a solenoid valve in communication with the output line to fluidly communicate a biased side of the SOV with the output line such that pressure on both sides of the SOV equalizes and cause closure of a biased SOV piston to shut off flow to the engine line.

In accordance with at least one aspect of this disclosure, a fuel system can include a fluid pump system as defined above.

In accordance with at least one aspect of this disclosure, a method is provided as defined by claim 15.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:

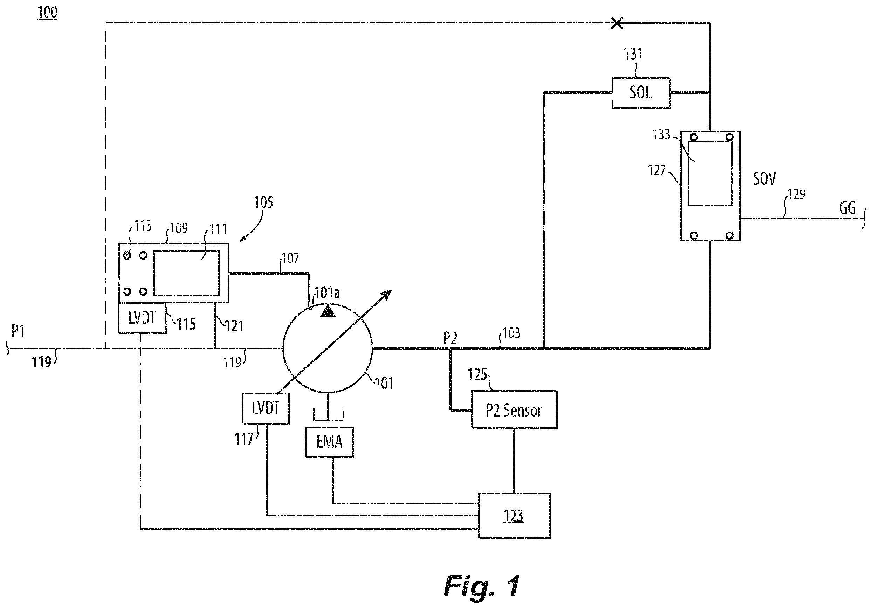

Fig. 1 is a schematic diagram of an embodiment of a fluid pump system in accordance with this disclosure.

### DETAILED DESCRIPTION

Reference will now be made to the drawings wherein like reference numerals identify similar structural features or aspects of the subject disclosure. For purposes of explanation and illustration, and not limitation, an illustrative view of an embodiment of a fluid pump system in accordance with the disclosure is shown in Fig. 1 and is designated generally by reference character 100. Certain embodiments described herein can be used to maintain a suitable pump temperature, e.g., at low speeds, while maintaining a desired output flow.

Referring to Fig. 1, a fluid pump system 100 can include a controllable pump 101 configured to generate a pump flow through the controllable pump 101 and to output an output flow to an output line 103. The fluid pump system 100 can include a flow split system 105 configured to be in fluid communication with the controllable pump 101 in a bypass state such that the flow split system 105 is configured to divert a portion of the pump flow to maintain a desired output flow to the output line 103 but to also allow the controllable pump 101 to maintain a minimum pump flow through the controllable pump 101 to maintain pump temperature below a high temperature threshold.

Embodiments can prevent pump overheating, for example, using the flow split system by requiring the pump to generate a large pump flow through the controllable pump 101 while not outputting too much flow to the output line 103.

The controllable pump 101 can utilize an electro mechanical actuator (EMA) for example. The EMA can include a controllable mechanical position to modify the total flow through the controllable pump 101.

The controllable pump 101 can be configured to open a low flow window 101a at a low displacement angle and/or position (e.g., based on a position of the pump, and/or as a function of speed). At suitably high flows, no bypass flow may be required to maintain pump temperature. The flow split system 105 can include a bypass line 107 in fluid communication with the low flow window 101a of the controllable pump 101.

The flow split system 105 can include a flow sense valve (FSV) 109 comprising a piston 111. The piston 111 can be biased (e.g., with a spring 113) against pressure on the bypass line 107 such that the bypass flow is configured to move the piston 111 (e.g., to the left against the spring 113 as shown in Fig. 1). In certain embodiments, the FSV 109 can be replaced by a suitable flow meter, for example.

The flow split system 105 can include a piston position sensor 115 associated with the piston 111 configured to determine a position of the piston 111. The piston position sensor 115 can be a linear variable differential transformer (LVDT), for example.

The controllable pump 101 can include a pump position sensor 117 configured to sense a position of the controllable pump 101. The pump position sensor 117 can be a LVDT, for example.

The controllable pump 101 can be connected to an inlet line 119 to receive flow therefrom. The FSV 109 can be connected to the inlet line 119 to circulate flow to the controllable pump 101 such that flow through the bypass line 107 pushes against the piston 111 and flows through the FSV 109 to a recirculate line 121.

The fluid pump system 100 can include a flow module 123 operatively connected to the pump position sensor 117, the piston position sensor 115, a pump speed source (e.g., a known commanded speed), and an output line pressure sensor 125. The flow module 123 can be configured to determine flow through the controllable pump 101 and flow through the bypass line 107 (and flow split system 105). The flow module 123 can be configured to subtract the flow through the bypass line 107 from the flow through the controllable pump 101 to determine the output flow. In certain embodiments, the fluid pump system 100 can include the pressure sensor 125 on the output line 103 downstream of the controllable pump 101.

In certain embodiments, the flow module 123 can be configured to determine pump flow through the controllable pump 101 as a function of a pump position, a pump speed, and an output line pressure. In certain embodiments, the flow module 123 can be configured to determine bypass flow on the bypass line 107 (and through the flow split system 105) as a function of a piston position (of piston 111), a piston spring constant (of spring 113), window geometry of the low flow window 101a, and an open area of the low flow window 101a at the controllable pump speed and/or position. Any other suitable variables to determine pump flow and bypass flow to determine output flow are contemplated herein. In certain embodiments, the flow module 123 can be configured to control the controllable pump 101 to generate a commanded output flow based on the determined output flow from the controllable pump 101 based on the bypass flow and pump flow.

In certain embodiments, the fluid pump system 100 can include a shut off valve (SOV) 127 between output line 103 and an engine line 129. The SOV 127 can be controlled by a solenoid valve 131 in communication with the output line 103 to fluidly communicate a biased side of the SOV 127 with the output line 103 such that pressure on both sides of the SOV 127 equalizes and cause closure of a biased SOV piston 133 to shut off flow to the engine line 129.

In accordance with at least one aspect of this disclosure, a fuel system can include a fluid pump system. The fluid pump system can be or include any suitable system disclosed herein, e.g., system 100 as described above. The fuel system can be fluid pump system 100 as shown, for example.

In accordance with at least one aspect of this disclosure, a method can include bypassing flow of a controllable pump while maintaining a desired output flow to cause a pump flow to maintain at least a minimum pump flow that maintains a pump temperature below a high temperature threshold. The method can include any other suitable method(s) and/or portion(s) thereof.

In traditional aircraft fuel systems, when a pump is turned down to reduce output flow, less fuel flows and the pump can get hot. There is a minimum flow needed to prevent the pump from overheating. Embodiments can utilize an electro mechanical actuator (EMA) to control the flow rate of the pump. Embodiments can selectively pump all pump flow to the output line e.g., to a gas generator (GG). Embodiments can present a simplified system and no longer need complex valve arrangements (e.g., no windmill bypass valve, no metering valves, etc.) which reduces size and weight of the fuel system.

Embodiments of an EMA can include a smart chip that correlates flow versus position characteristic. If position of the EMA, P2 from sensor, and speed (e.g., gear speed which is known from operation of pump) are all known, one can calculate total pump flow (e.g., output flow when there is no bypass). In scenarios where there is a low flow output desired, the EMA can open a secondary path to an FSV. For example, the EMA can move the pump to a low displacement angle/position, e.g., where the flow passage/window in the pump housing exists. Knowing the stiffness of the FSV spring, the window geometry, and the window open area (e.g., which can be function of the pump position LVDT/speed of operation), flow through the FSV (and the bypass line) can be calculated (spring stiffness allows determination of pressure drop over the FSV). The total pump flow minus the FSV flow is the output flow (e.g., flow to GG). With such arrangements, a minimum flow can be maintained through the controllable pump to not prevent it from overheating.

Embodiments can include an electrically direct controlled variable displacement metering pump with measured integral pump bypass flow. Embodiments can utilize a variable displacement pump with direct pump displacement control via an electro-mechanical actuator and a pressure sensor. A pump position can be set to maintain a pressure and flow schedule to support flow demands for a gas generator or augmentor, for example. Pump minimum flows can be kept high (relative) due to the internal flow passage revealed at low displacements. A flow sensing valve or other suitable flow measuring device can be used to determine flow sent back to pump source at these low displacements. Embodiments can utilize a pump mapping and pressure sensor, and this bypassed flow can be subtracted from the total pump flow to understand what the total output to the output line is (e.g., flow to GG). A SOV can be used to provide a fast shut-off response.

Embodiments can include any suitable computer hardware and/or software module(s) to perform any suitable function (e.g., as disclosed herein).

As will be appreciated by those skilled in the art, aspects of the present disclosure may be embodied as a system, method or computer program product. Accordingly, aspects of this disclosure may take the form of an entirely hardware embodiment, an entirely software embodiment (including firmware, resident software, micro-code, etc.), or an embodiment combining software and hardware aspects, all possibilities of which can be referred to herein as a "circuit," "module," or "system." A "circuit," "module," or "system" can include one or more portions of one or more separate physical hardware and/or software components that can together perform the disclosed function of the "circuit," "module," or "system", or a "circuit," "module," or "system" can be a single self-contained unit (e.g., of hardware and/or software). Furthermore, aspects of this disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of this disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of this disclosure may be described above with reference to flowchart illustrations and/or block diagrams of methods, apparatus (systems) and computer program products according to embodiments of this disclosure. It will be understood that each block of any flowchart illustrations and/or block diagrams, and combinations of blocks in any flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in any flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified herein.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein as appreciated by those having ordinary skill in the art in view of this disclosure, and that are within the scope of the claims.

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the scope of the invention as defined by the claims.

## Claims

1. A fluid pump system for supplying fuel in an aircraft engine, comprising:
a controllable pump (101) configured to generate a pump flow through the controllable pump and to output an output flow to an output line (103) for providing the output flow to a combustor, an augmenter or a gas generator of the aircraft engine; and **characterised by** further comprising:
a flow split system (105) configured to be in fluid communication with the controllable pump in a bypass state such that the flow split system is configured to divert a portion of the pump flow to maintain a desired output flow to the output line but to also allow the controllable pump to maintain a minimum pump flow through the controllable pump to maintain pump temperature below a high temperature threshold.

2. The fluid pump system of claim 1, wherein the controllable pump (101) is configured to open a low flow window at a low displacement angle and/or position.

3. The fluid pump system of claim 2, wherein the flow split system includes (105) a bypass line (107) in fluid communication with the low flow window of the controllable pump.

4. The fluid pump system of claim 3, wherein the flow split system includes a flow sense valve, FSV, (109) comprising a piston (111), wherein the piston is biased against pressure on the bypass line such that the bypass flow is configured to move the piston.

5. The fluid pump system of claim 4, wherein the flow split system includes a piston position sensor (115) associated with the piston configured to determine a position of the piston, and optionally wherein the piston position sensor is a linear variable differential transformer, LVDT.

6. The fluid pump system of claim 5, wherein the controllable pump includes a pump position sensor configured to sense a position of the controllable pump, and optionally the pump position sensor is a linear variable differential transformer, LVDT.

7. The fluid pump system of claim 6, further comprising a flow module (123) operatively connected to the pump position sensor, the piston position sensor, a pump speed source, and an output line pressure sensor (125), and configured to determine flow through the controllable pump and flow through the bypass line and flow split system, and to subtract the flow through the bypass line from the flow through the controllable pump to determine the output flow.

8. The fluid pump system of claim 7, further comprising the pressure sensor on the output line downstream of the controllable pump.

9. The fluid pump system of claim 7, wherein the flow module is configured to determine pump flow through the controllable pump as a function of a pump position, a pump speed, and an output line pressure.

10. The fluid pump system of claim 8, wherein the flow module is configured to determine bypass flow on the bypass line and through the flow split system as a function of a piston position, a piston spring constant, window geometry of the low flow window, and an open area of the low flow window at the controllable pump speed and/or position.

11. The fluid pump system of claim 10, wherein the flow module is configured to control the controllable pump to generate a commanded output flow based on the determined output flow from the controllable pump based on the bypass flow and pump flow.

12. The fluid pump system of claim 11, further comprising a shut off valve, SOV, between output line and an engine line.

13. The fluid pump system of claim 12, wherein the SOV is controlled by a solenoid valve in communication with the output line to fluidly communicate a biased side of the SOV with the output line such that pressure on both sides of the SOV equalizes and cause closure of a biased SOV piston to shut off flow to the engine line.

14. A fuel system, comprising:
a fluid pump system as claimed in any preceding claim.

15. A method for supplying fuel in an aircraft engine, the method **characterised by** comprising:
bypassing flow of a controllable pump while maintaining a desired output flow to a combustor, an augmenter or a gas generator of the aircraft engine to cause a pump flow to maintain at least a minimum pump flow that maintains a pump temperature below a high temperature threshold.

## Patentansprüche

1. Fluidpumpensystem zur Treibstoffeinspeisung in ein Luftfahrzeugtriebwerk, umfassend:
eine steuerbare Pumpe (101), die dazu konfiguriert ist, einen Pumpenstrom durch die steuerbare Pumpe zu erzeugen und einen Ausgangsstrom an eine Ausgangsleitung (103) abzugeben, um den Ausgangsstrom an eine Brennkammer, einen Verstärker oder einen Gasgenerator des Luftfahrzeugtriebwerks bereitzustellen; und
**dadurch gekennzeichnet, dass** es ferner Folgendes umfasst:
ein Stromteilungssystem (105), das dazu konfiguriert ist, in einem Umleitungszustand in Fluidverbindung mit der steuerbaren Pumpe zu stehen, derart, dass das Stromteilungssystem dazu konfiguriert ist, einen Teil des Pumpenstroms abzuzweigen, um einen gewünschten Ausgangsstrom zur Ausgangsleitung aufrechtzuerhalten, aber auch der steuerbaren Pumpe zu ermöglichen, einen minimalen Pumpenstrom durch die steuerbare Pumpe aufrechtzuerhalten, um die Pumpentemperatur unter einem Hochtemperaturschwellenwert zu halten.

2. Fluidpumpensystem nach Anspruch 1, wobei die steuerbare Pumpe (101) dazu konfiguriert ist, eine Niedrigstromklappe bei einem niedrigen Verdrängungswinkel und/oder einer niedrigen Verdrängungsposition zu öffnen.

3. Fluidpumpensystem nach Anspruch 2, wobei das Stromteilungssystem (105) eine Umleitungsleitung (107) beinhaltet, die in Fluidverbindung mit der Niedrigstromklappe der steuerbaren Pumpe steht.

4. Fluidpumpensystem nach Anspruch 3, wobei das Stromteilungssystem ein Stromerfassungsventil (FSV) (109) beinhaltet, das einen Kolben (111) umfasst, wobei der Kolben gegen den Druck in der Umleitungsleitung derart vorgespannt ist, dass der Umleitungsstrom dazu konfiguriert ist, den Kolben zu bewegen.

5. Fluidpumpensystem nach Anspruch 4, wobei das Stromteilungssystem einen mit dem Kolben verbundenen Kolbenpositionssensor (115) beinhaltet, der dazu konfiguriert ist, eine Position des Kolbens zu bestimmen, und wobei optional der Kolbenpositionssensor ein linearer variabler Differentialtransformator (LVDT) ist.

6. Fluidpumpensystem nach Anspruch 5, wobei die steuerbare Pumpe einen Pumpenpositionssensor beinhaltet, der dazu konfiguriert ist, eine Position der steuerbaren Pumpe zu erfassen, und wobei optional der Pumpenpositionssensor ein linearer variabler Differentialtransformator (LVDT) ist.

7. Fluidpumpensystem nach Anspruch 6, ferner umfassend ein Strommodul (123), das mit dem Pumpenpositionssensor, dem Kolbenpositionssensor, einer Pumpendrehzahlquelle und einem Ausgangsleitungsdrucksensor (125) wirkverbunden und dazu konfiguriert ist, den Strom durch die steuerbare Pumpe und den Strom durch die Umleitungsleitung und das Stromteilungssystem zu bestimmen und den Strom durch die Umleitungsleitung vom Strom durch die steuerbare Pumpe abzuziehen, um den Ausgangsstrom zu bestimmen.

8. Fluidpumpensystem nach Anspruch 7, ferner umfassend den Drucksensor in der Ausgangsleitung stromabwärts der steuerbaren Pumpe.

9. Fluidpumpensystem nach Anspruch 7, wobei das Strommodul dazu konfiguriert ist, den Pumpenstrom durch die steuerbare Pumpe in Abhängigkeit von einer Pumpenposition, einer Pumpendrehzahl und einem Ausgangsleitungsdruck zu bestimmen.

10. Fluidpumpensystem nach Anspruch 8, wobei das Strommodul dazu konfiguriert ist, den Umleitungsstrom auf der Umleitungsleitung und durch das Stromteilungssystem in Abhängigkeit von einer Kolbenposition, einer Kolbenfederkonstante, einer Klappengeometrie der Niedrigstromklappe und einer offenen Fläche der Niedrigstromklappe bei der steuerbaren Pumpengeschwindigkeit und/oder -position zu bestimmen.

11. Fluidpumpensystem nach Anspruch 10, wobei das Strommodul dazu konfiguriert ist, die steuerbare Pumpe zu steuern, um einen befohlenen Ausgangsstrom basierend auf dem bestimmten Ausgangsstrom aus der steuerbaren Pumpe basierend auf dem Umleitungsstrom und dem Pumpenstrom zu erzeugen.

12. Fluidpumpensystem nach Anspruch 11, ferner umfassend ein Absperrventil (SOV) zwischen der Ausgangsleitung und einer Triebwerksleitung.

13. Fluidpumpensystem nach Anspruch 12, wobei das SOV durch ein Magnetventil gesteuert wird, das mit der Ausgangsleitung in Verbindung steht, um eine vorgespannte Seite des SOV mit der Ausgangsleitung fluidisch derart zu verbinden, dass der Druck auf beiden Seiten des SOV ausgeglichen wird und das Schließen eines vorgespannten SOV-Kolbens bewirkt, um den Strom zur Triebwerksleitung abzusperren.

14. Treibstoffsystem, umfassend:
ein Fluidpumpensystem nach einem der vorhergehenden Ansprüche.

15. Verfahren zum Einspeisen von Treibstoff in ein Luftfahrzeugtriebwerk, wobei das Verfahren **dadurch gekennzeichnet ist, dass** es Folgendes umfasst:
Umleiten des Stroms einer steuerbaren Pumpe bei gleichzeitigem Aufrechterhalten eines gewünschten Ausgangsstroms zu einer Brennkammer, einem Verstärker oder einem Gasgenerator des Luftfahrzeugtriebwerks, um zu bewirken, dass ein Pumpenstrom mindestens einen minimalen Pumpenstrom aufrechterhält, der eine Pumpentemperatur unter einem Hochtemperaturschwellenwerts hält.

## Revendications

1. Système de pompe à fluide pour l'alimentation en carburant dans un moteur d'aéronef, comprenant :
une pompe pouvant être commandée (101) configurée pour générer un débit de pompe à travers la pompe pouvant être commandée et pour sortir un débit de sortie vers une conduite de sortie (103) pour fournir le débit de sortie à une chambre de combustion, un dispositif d'augmentation de pression ou un générateur de gaz du moteur d'aéronef ; et **caractérisé en outre en ce qu'**il comprend :
un système de division de débit (105) configuré pour être en communication fluidique avec la pompe pouvant être commandée dans un état de dérivation de telle sorte que le système de division de débit est configuré pour détourner une partie du débit de pompe pour maintenir un débit de sortie souhaité vers la conduite de sortie, mais aussi pour permettre à la pompe pouvant être commandée de maintenir un débit de pompe minimal à travers la pompe pouvant être commandée pour maintenir une température de pompe en dessous d'un seuil de température élevé.

2. Système de pompe à fluide selon la revendication 1, dans lequel la pompe pouvant être commandée (101) est configurée pour ouvrir une fenêtre de faible débit à un angle et/ou une position de déplacement faible.

3. Système de pompe à fluide selon la revendication 2, dans lequel le système de division de débit comporte (105) une conduite de dérivation (107) en communication fluidique avec la fenêtre de faible débit de la pompe pouvant être commandée.

4. Système de pompe à fluide selon la revendication 3, dans lequel le système de division de débit comporte une vanne de détection de débit, FSV, (109) comprenant un piston (111), dans lequel le piston est contraint contre la pression sur la conduite de dérivation de telle sorte que le débit de dérivation est configuré pour déplacer le piston.

5. Système de pompe à fluide selon la revendication 4, dans lequel le système de division de débit comporte un capteur de position de piston (115) associé au piston configuré pour déterminer une position du piston, et éventuellement dans lequel le capteur de position de piston est un transformateur différentiel linéaire variable, LVDT.

6. Système de pompe à fluide selon la revendication 5, dans lequel la pompe pouvant être commandée comporte un capteur de position de pompe configuré pour détecter une position de la pompe pouvant être commandée, et éventuellement le capteur de position de pompe est un transformateur différentiel linéaire variable, LVDT.

7. Système de pompe à fluide selon la revendication 6, comprenant en outre un module de débit (123) relié fonctionnellement au capteur de position de pompe, au capteur de position de piston, à une source de vitesse de pompe et à un capteur de pression de conduite de sortie (125), et configuré pour déterminer un débit à travers la pompe pouvant être commandée et un débit à travers la conduite de dérivation et le système de division de débit, et pour soustraire le débit à travers la conduite de dérivation du débit à travers la pompe pouvant être commandée pour déterminer le débit de sortie.

8. Système de pompe à fluide selon la revendication 7, comprenant en outre le capteur de pression sur la conduite de sortie en aval de la pompe pouvant être commandée.

9. Système de pompe à fluide selon la revendication 7, dans lequel le module de débit est configuré pour déterminer un débit de pompe à travers la pompe pouvant être commandée en fonction d'une position de pompe, d'une vitesse de pompe et d'une pression de conduite de sortie.

10. Système de pompe à fluide selon la revendication 8, dans lequel le module de débit est configuré pour déterminer un débit de dérivation sur la conduite de dérivation et à travers le système de division de débit en fonction d'une position de piston, d'une constante de ressort de piston, d'une géométrie de fenêtre de la fenêtre de faible débit et d'une aire ouverte de la fenêtre de faible débit à la vitesse et/ou à la position de pompe pouvant être commandée.

11. Système de pompe à fluide selon la revendication 10, dans lequel le module de débit est configuré pour commander la pompe pouvant être commandée pour générer un débit de sortie commandé basé sur le débit de sortie déterminé de la pompe pouvant être commandée sur la base du débit de dérivation et du débit de pompe.

12. Système de pompe à fluide selon la revendication 11, comprenant en outre une vanne d'arrêt, SOV, entre la conduite de sortie et une conduite de moteur.

13. Système de pompe à fluide selon la revendication 12, dans lequel la SOV est commandée par une électrovanne en communication avec la conduite de sortie pour faire communiquer de manière fluide un côté contraint de la SOV avec la conduite de sortie de telle sorte que la pression des deux côtés de la SOV s'égalise et provoque une fermeture d'un piston de SOV contraint pour couper le débit vers la conduite de moteur.

14. Système de carburant, comprenant :
un système de pompe à fluide selon une quelconque revendication précédente.

15. Procédé d'alimentation en carburant dans un moteur d'aéronef, le procédé étant **caractérisé en ce qu'**il comprend :
la dérivation d'un débit d'une pompe pouvant être commandée tout en maintenant un débit de sortie souhaité vers une chambre de combustion, un dispositif d'augmentation de pression ou un générateur de gaz du moteur d'aéronef pour amener un débit de pompe à maintenir au moins un débit de pompe minimal qui maintient une température de pompe en dessous d'un seuil de température élevé.
